# EUROPEAN PATENT SPECIFICATION

(11) **EP 1 169 555 B1**
(45) Date of publication and mention of the grant of the patent: **20.10.2004**
(21) Application number: 00927377.2
(22) Date of filing: 13.04.2000
(51) Int. Cl.: F01N 7/18, F16L 27/111, F16L 51/02

(54) **VEHICLE EXHAUST SYSTEM**
KRAFTFAHRZEUG-ABGASANLAGE
SYSTEME DE TUYAU D'ECHAPPEMENT POUR VEHICULE

(30) Priority: 14.04.1999 GB 9908547
(43) Date of publication of application: 09.01.2002
(73) Proprietor: Calsonic Kansei UK Limited, Llanelli, Carmarthenshire SA14 8HU (GB)
(72) Inventor: SPRASON, Malcolm, Morpeth, Northumberland NE61 6LJ (GB)
(74) Representative: Davies, Gregory Mark
(86) International application number: PCT/GB2000/001409
(87) International publication number: WO 2000/061926

(56) References cited:
- EP-A- 0 807 749
- EP-A- 0 861 974
- FR-A- 2 315 605
- US-A- 4 270 776
- US-A- 5 437 479
- PATENT ABSTRACTS OF JAPAN vol. 017, no. 282 (M-1420), 31 May 1993 (1993-05-31) & JP 05 010120 A (SANGO:KK), 19 January 1993 (1993-01-19)

## Description

The present invention relates to a vehicle exhaust system, and in particular to such a system incorporating a connection known in the art as a flexible coupling.

Exhaust systems incorporating flexible couplings for connecting axially adjacent exhaust pipe portions are known and disclosed, for example in EP-A-0861974 and DE-A-29708669. Such flexible couplings typically include a spring bellows seal extending between the adjacent exhaust pipe portions, permitting the pipe portions to displace in both directions. The bellows perform the functions of:
i) providing a gas seal preventing leakage of exhaust gas from the exhaust system; and,
ii) acting as a spring damper to prevent transmission of vibration from the engine to items downstream in the exhaust system such as catalytic converters.

As described in EP-A-0861974, conventional flexible connections have usually employed an outer wire mesh or wire rope sheath to prevent over-stretching/collapsing of the bellows and also acting to an extent as a vibration damper. Particularly in load bearing situations (for example where the axis of the coupling is arranged vertically, and the coupling consequently supports a significant portion of the exhaust system weight) the wire mesh or rope sheath is not well suited to counteract forces acting to expand the coupling (expanding the bellows). In such circumstances, excess expanding (load) force may cause damage to the joint.

US5437479 discloses a vehicle exhaust system which may be described as comprising:
a first exhaust pipe portion;
a second exhaust pipe portion in substantial axial alignment with the first exhaust pipe portion and displaceable axially relative to the first exhaust pipe portion;
a seal elemetn extending between the first and second exhaust pipe portions, the seal being expandable or contractible in the axial direction dependant upon relative displacement of the first and second pipe portions; and,
securing means securing the first and second pipe portions in a predetermined axial orientation, the securing means comprising spring means arranged to exert a biassing force in opposed axial directions depending upon the displacement relationship between the first and second pipe portions.

An improved vehicle exhaust system flexible coupling has now been devised. According to the invention, the securing means comprises a spring clip arrangement having a respective limb acting on a respective one of the first and second exhaust pipe portions.

The spring clip arrangement ensures that the axial forces in both directions are primarily taken up in the spring clip rather than the expandable/contractible seal. By selecting the appropriate spring characteristics for a particular situation, the degree of stiffness or flexibility of the coupling can be selectively determined.

Furthermore, in view of trends to include increasing numbers of components (such as catalytic converters and mufflers) in the exhaust system it is desirable to provide the flexible coupling as close as possible to the engine exhaust outlet manifold. This is particularly the case in view of improved catalytic converter performance achievable by situating the catalytic converter as close as possible to the engine.

It is therefore advantageous to include the flexible coupling in a portion of the exhaust system extending substantially vertically from the engine exhaust outlet manifold. To do this means that a proportion of the weight of the exhaust system is transmitted to the flexible coupling. The present invention ameliorates the possibility of damage to the expandable/contractible seal that might otherwise occur, because the weight is transmitted via the spring clip arrangement. When the spring clip arrangement is in equilibrium supporting the proportion of the weight of the exhaust system it remains able to permit the upstream and downstream portions of the exhaust pipe to displace in either axial direction whilst exerting a spring force tending to return the arrangement to the equilibrium position.

The respective limbs at the spring clip arrangement desirably extend adjacent one another and preferably being connected proximate respective proximal portions at a spring connection. The respective distal ends of respective limbs are preferably spaced from one another and have respective terminal portions.

The spring clip arrangement preferably includes a central void portion for accommodating the exhaust pipe permitting the spring clip arrangement to straddle the exhaust pipe.

The provision of a spring clip aids in ease of assembly and construction of the exhaust system.

The spring clip beneficially acts on respective ones of the first and second exhaust pipe portions at circumferentially spaced positions about the axis of the first and second pipe portions.

Desirably, one (or more preferably both) of the first and second pipe portions is provided with a respective connection collar, the spring clip preferably acting on the respective connection collars. The connection collars preferably extend substantially about the exhaust pipe axis substantially enclosing the expandable or contractible seal.

A seal may be provided between the respective connection collars.

The respective connection collars beneficially have overlapping portions overlapping in the axial direction of the exhaust pipe. A circumferential seal is preferably provided between the respective overlapping portions, the circumferential seal preferably being effectively fixed relative to one of the connection collars and slidable relative to the other.

The connection collars are beneficially provided with respective engagement formations upon which the spring clip acts. Each connection collar is preferably provided with respective engagement formations spaced in the axial direction of the exhaust pipe upon which respective limbs of the spring clip arrangement acts in opposed axial directions. The engagement formations may comprise respective depressions, or projections, preferably running circumferentially about the outer surface of the respective connection collars.

The expandable or contractible seal advantageously comprises a bellows seal connected to the first and second exhaust pipe portions respectively. Desirably, each of the first and second pipe portions is provided with a respective connection collar over laying the respective pipe portion, the bellows seal having portions sandwiched between respective exhaust pipe portions and overlaying collars.

A tubular shield preferably extends adjacent at least a portion of the expandable or contractible seal on the axial side of the seal. The tubular shield preferably comprises a portion of one of the first and second exhaust pipe portions.

The invention will now be further described in a specific embodiment by way of example only, and with reference to the accompanying drawings in which:
Figure 1, is a schematic part sectional view of an exhaust system according to the invention.
Figure 2, is a schematic front view of a spring clip comprising a system according to the invention; and
Figure 3, is a schematic side view of the spring clip of figure 1.

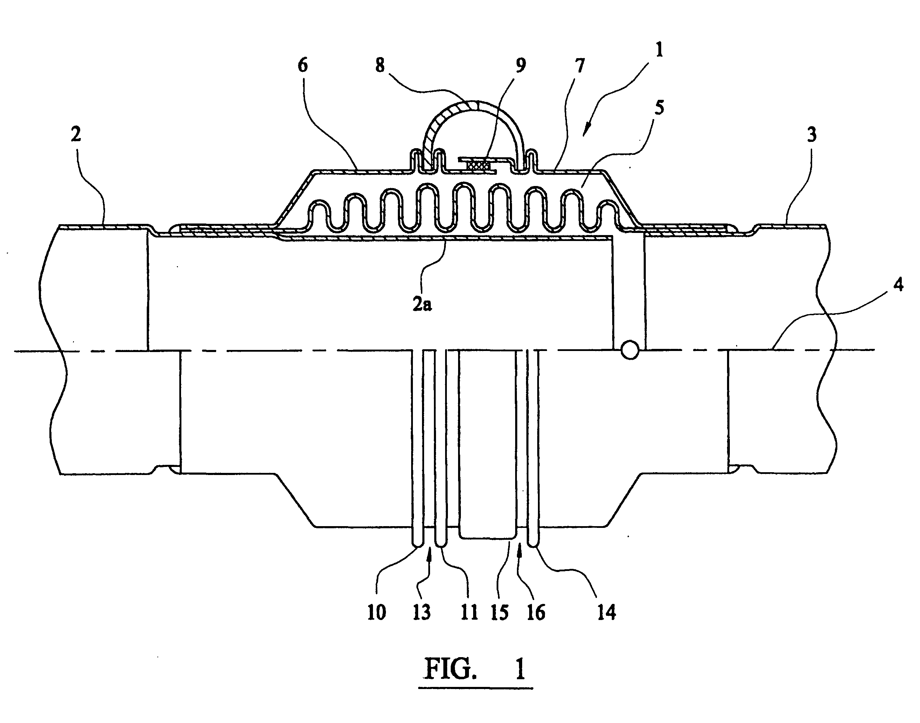

Referring to the drawings, there is shown a portion of a vehicle exhaust system 1, including an upstream exhaust pipe portion 2 and downstream exhaust pipe portion 3 which are axially co-aligned along axis 4. Pipe portions 2, 3 are arranged end to end and coupled by an arrangement including a flexible metallic bellows seal 5 extending between pipe portions 2,3 providing a flexible gas sealed connection between the adjacent ends of pipe portions 2, 3. Respective connection collars 6, 7 are fixed to respective pipe portions 2, 3, the collars being coupled together secured in the arrangement shown in Figure 1 by a securing spring clip 8.

The opposed ends of bellows seal 5 are spot welded to respective outer collars 6, 7 which are themselves welded to respective pipe portions 2, 3. Collars 6, 7 overlap in the axial direction, and a wire mesh seal 9 is spot welded to the internal circumference of the outer collar 7, and extends angularly around the circumference of the collars 6, 7 to provide an annular sliding seal as the connection expands and contracts (as a result of pipe portions 2, 3 being axially displaced). The wire mesh seal 9 carried by outer collar 7 slides in the axial direction in sealing abutment with the annular outer surface of collar 6.

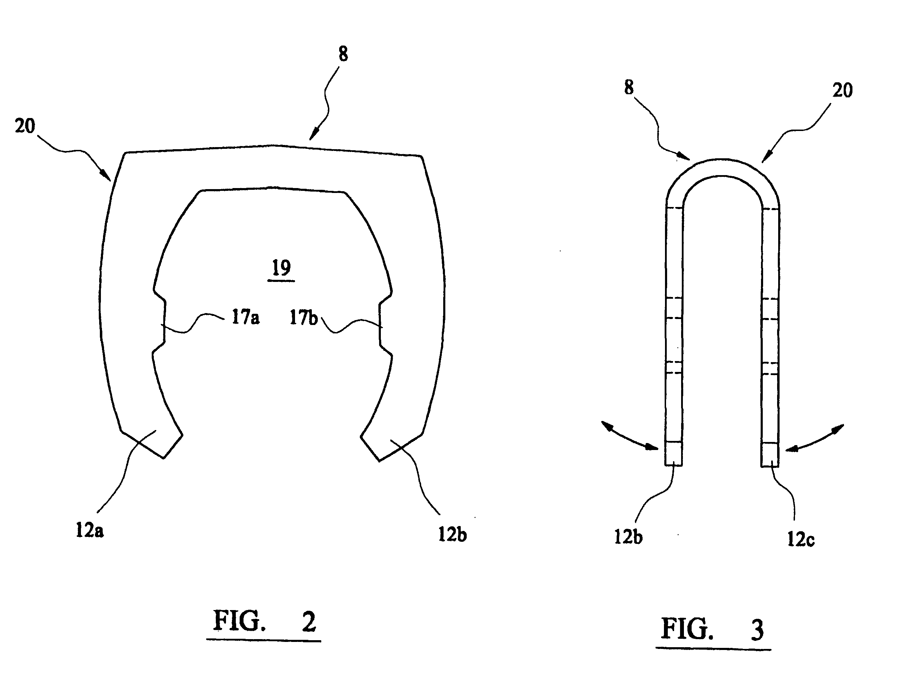

Annular collar 6 includes a pair of upstanding circumferentially running ridges 10, 11 defining a circumferentially running slot 13 configured to receive securing tabs 17a, 17b carried by a first pair of arms (12a, 12b) of spring clip 8. Collar 7 includes an upstanding ridge 14 and spaced shoulder 15, defining a circumferentially running slot 16 for receiving tabs 17c, 17d carried by arms 12c, 12d of spring clip 8. As shown in Figure 2, spring clip 8 includes a central void portion 19 arranged to accommodate the diameter of the collar 6, 7. The clip snaps in position around the connection and thereafter remains in the clipped position. The spring connection between the arms 12 at the proximal end 20 of the clip 8 enables the respective pairs of arms 12a, 12d and 12b, 12c to be deflected against a biassing spring force in the direction shown by the arrows in figure 3.

In use, the arrangement permits pipe portions 2, 3 to displace relative to one another axially (as a result of forces acting in operation). The engagement tabs 17a, 17b of spring clip 8 acts on ridges 10, 11, 14 or shoulder 15 of the respective collar 6, 7 tending to restore the pipes 2, 3 to an equilibrium orientation against forces acting to displace pipe portions 2, 3 from the equilibrium position. The use of spring clip 8 therefore ensures that the arrangement acts more than as simply a "stop" mechanism limiting the extent to which the connection may be expanded/contracted, by rather the restoring force provided by the spring increases with deflection of the spring arms (and consequently the pipe portions 2, 3) away from the equilibrium position.

The spring force acting on pipe portions 2, 3 via the respective collars 6, 7 provides that forces are taken up via the spring clip 8 rather than the flexible metallic bellows 5. This results in improved life of the bellow seal 5 and therefore of the connection.

A further advantageous feature is that pipe portion 2 includes a narrowed diameter terminal portion 2a which extends adjacent the majority of the length of the bellows seal shielding the bellow seal 5, to a degree, from the hot exhaust gasses passing along the exhaust system.

The arrangement is believed to be particularly useful where the connection is arranged with its axis in a vertical orientation (not horizontal as shown in Figure 1) because in such an orientation a portion of the weight of the exhaust system will be transmitted via the connection. The arrangement according to the invention ensures that exhaust system weight transmitted via the connection is taken up in the spring clip 8 (acting on collars 6, 7) rather than through the bellows seal 5.

An arrangement in which the connection is orientated with its axis extending vertically (rather than horizontally) is believed to be beneficial because it enables the catalytic convertor (situated downstream of the flexible connection 1) to be positioned more closely to the engine exhaust outlet manifold which improves performance of the catalytic convertor. Such an arrangement further provides increased facility downstream for inclusion in the exhaust system of further systems (such as mufflers and further catalytic convertors).

## Claims

1. A vehicle exhaust system (1) comprising:
a first exhaust pipe portion (2);
a second exhaust pipe portion (3) in substantial axial alignment with the first exhaust pipe portion (2) and displaceable axially relative to the first exhaust pipe portion (2);
a seal element (5) extending between the first and second exhaust pipe portions (2,3), the seal (5) being expandable or contractible in the axial direction dependant upon relative displacement of the first and second pipe portions (2,3); and,
securing means securing the first and second pipe portions (2,3) in a predetermined axial orientation, the securing means comprising spring means arranged to exert a biassing force in opposed axial directions depending upon the displacement relationship between the first and second pipe portions (2,3);
**characterised in that** the securing means comprises a spring clip arrangement (8) having a respective limb (12a, 12b, 12c, 12d) acting on a respective one of the first and second exhaust pipe portions (2,3).

2. A vehicle exhaust system (1) according to claim 1, wherein the respective limbs (12a, 12b, 12c, 12d) extend adjacent one another, and are connected proximate respective proximal portions at a spring connection (20).

3. A vehicle exhaust system (1) according to claim 1 or 2, wherein the respective limbs (12a, 12b, 12c, 12d) act on respective ones of the first and second exhaust pipe portions (2, 3) at circumferentially spaced positions about the axis of the first and second pipe portions (2, 3).

4. A vehicle exhaust system (1) according to any preceding claim, wherein the respective limbs (12a, 12b, 12c, 12d) have a central void portion (19) for accommodating the exhaust pipe (2, 3) permitting the spring clip arrangement to straddle the exhaust pipe (2, 3).

5. A vehicle exhaust system (1) according to any preceding claim, wherein each of the first and second pipe portions (2, 3) is provided with a respective connection collar (6, 7).

6. A vehicle exhaust system (1) according to claim 5, wherein the respective connection collars (6, 7) extend circumferentially about the exhaust pipe axis substantially enclosing the expandable or contractible seal (5).

7. A vehicle exhaust system (1) according to claim 5 or 6, wherein the respective connection collars (6,7) have overlapping portions, and preferably a circumferential seal (9) provided between the respective overlapping portions, wherein the circumferential seal (9) is preferably effectively fixed relative to one of the connection collars (7) and slidable relative to the other (6).

8. A vehicle exhaust system (1) according to any of claims 5 to 7, wherein the spring clip arrangement (8) acts on the respective connection collars (6, 7).

9. A vehicle exhaust system (1) according to claim 8, wherein the respective engagement formations (10, 11, 13) (14, 15, 16) are spaced in the axial direction of the exhaust pipe (2, 3) upon which respective formations (10, 11, 13) (14, 15, 16) the respective limbs (12a, 12b, 12c, 12d) of the spring clip (8) act in opposed axial directions.

10. A vehicle exchange system (1) according to claim 8 or 9, wherein the engagement formations (10, 11, 13) (14, 15, 16) comprise respective depressions, or projections running circumferentially about the outer surface of the respective connection collars (6, 7).

11. A vehicle exhaust system (1) according to any preceding claim, wherein the expandable or contractible seal (5) comprises a bellows seal connected to the first and second exhaust pipe portions (2, 3) respectively.

12. A vehicle exhaust system (1) according to claim 11, wherein each of the first and second pipe portions (2, 3) is provided with a respective connection collar (6, 7) over laying the respective pipe portion, the bellows seal (5) having portions sandwiched between respective exhaust pipe portions (2, 3) and overlaying collars (6, 7).

13. A vehicle exhaust system (1) according to any preceding claim, wherein a tubular shield (2a) extends adjacent at least a portion of the expandable or contractible seal (5).

14. A vehicle exhaust system according to claim 13, wherein the tubular shield (2a) comprises a portion of one of the first and second exhaust pipe portions (2, 3) extending adjacent at least a portion of the expandable or contractible seal (5).

## Patentansprüche

1. Fahrzeugabgassystem (1), aufweisend:
einen ersten Abgasrohrabschnitt (2),
einen zweiten Abgasrohrabschnitt (3) in im Wesentlichen axialer Ausrichtung zum ersten Abgasrohrabschnitt (2) und relativ zum ersten Abgasrohrabschnitt (2) axial verschiebbar.
ein sich zwischen dem ersten und zweiten Abgasrohrabschnitt (2, 3) erstreckendes Dichtungselement (5), wobei die Dichtung (5) in der axialen Richtung abhängig von einer relativen Verschiebung des ersten und zweiten Rohrabschnitts (2, 3) expandierbar oder kontrahierbar ist, und
eine den ersten und zweiten Rohrabschnitt (2, 3) in einer vorbestimmten axialen Orientierung befestigenden Befestigungseinrichtung, wobei die Befestigungseinrichtung eine zum Ausüben einer von der Verschiebebeziehung zwischen dem ersten und zweiten Rohrabschnitt (2, 3) abhängigen vorspannenden Kraft in entgegengesetzten axialen Richtungen angeordnete Federeinrichtung aufweist,
**dadurch gekennzeichnet, dass** die Befestigungseinrichtung eine Federklammeranordnung (8) aufweist, die einen auf einen jeweiligen des ersten und zweiten Abgasrohrabschnitts (2, 3) wirkenden jeweiligen Schenkel (12a, 12b, 12c, 12d) aufweist.

2. Fahrzeugabgassystem (1) nach Anspruch 1, wobei sich die jeweiligen Schenkel (12a, 12b, 12c, 12d) nebeneinander erstrecken und proximal jeweiliger proximaler Abschnitte an eine Federverbindung (20) angeschlossen sind.

3. Fahrzeugabgassystem (1) nach Anspruch 1 oder 2, wobei die jeweiligen Schenkel (12a, 12b, 12c, 12d) auf jeweilige des ersten und zweiten Abgasrohrabschnitts (2, 3) an umfangsmäßig räumlich beabstandeten Positionen um die Achse des ersten und zweiten Rohrabschnitts (2, 3) wirken.

4. Fahrzeugabgassystem (1) nach einem der vorhergehenden Ansprüche, wobei die jeweiligen Schenkel (12a, 12b, 12c, 12d) einen zentralen Hohlraumabschnitt (19) zur Aufnahme des Abgasrohr (2, 3) aufweisen, welcher der Federklammeranordnung erlaubt, rittlings bezüglich des Abgasrohrs (2, 3) angeordnet zu sein.

5. Fahrzeugabgassystem (1) nach einem der vorhergehenden Ansprüche, wobei jeder des ersten und zweiten Rohrabschnitts (2, 3) mit einem jeweiligen Verbindungsring (6, 7) versehen ist.

6. Fahrzeugabgassystem (1) nach Anspruch 5, wobei die jeweiligen Verbindungsringe (6, 7) sich umfangsmäßig um die Abgasrohrachse erstrecken, wobei sie die expandierbare oder kontrahierbare Dichtung (5) umschließen.

7. Fahrzeugabgassystem (1) nach Anspruch 5 oder 6, wobei die jeweiligen Verbindungsringe (6, 7) sich überlappende Abschnitte aufweisen und vorzugsweise zwischen den jeweiligen sich überlappenden Abschnitten eine Umfangsdichtung (9) vorgesehen ist, wobei die Umfangsdichtung (9) vorzugsweise relativ zu einem der Verbindungsringe (7) effektiv befestigt und relativ zum anderen (6) verschiebbar ist.

8. Fahrzeugabgassystem (1) nach einem der Ansprüche 5 bis 7, wobei die Federklammeranordnung (8) auf die jeweiligen Verbindungsringe (6, 7) wirkt.

9. Fahrzeugabgassystem (1) nach Anspruch 8, wobei die jeweiligen Eingriffsformationen (10, 11, 13) (14, 15, 16) in der axialen Richtung des Abgasrohrs (2, 3) räumlich beabstandet sind, auf welchen jeweiligen Formationen (10, 11, 13) (14, 15, 16) die jeweiligen Schenkel (12a, 12b, 12c, 12d) der Federklammer (8) in entgegengesetzten axialen Richtungen wirken.

10. Fahrzeugabgassystem (1) nach Anspruch 8 oder 9, wobei die Eingriffsformationen (10, 11, 13) (14, 15, 16) jeweilige Vertiefungen oder Vorsprünge aufweisen, die umfangsmäßig um die äußere Oberfläche der jeweiligen Verbindungsringe (6, 7) laufen.

11. Fahrzeugabgassystem (1) nach einem der vorhergehenden Ansprüche, wobei die expandierbare oder kontrahierbare Dichtung (5) eine mit dem ersten bzw. zweiten Abgasrohrabschnitt (2, 3) verbundene Faltenbalgdichtung aufweist.

12. Fahrzeugabgassystem (1) nach Anspruch 11, wobei jeder des ersten und zweiten Rohrabschnitts (2, 3) mit einem jeweiligen Verbindungsring (6, 7), der den jeweiligen Rohrabschnitt überlagert, versehen ist, wobei die Faltenbalgdichtung (5) Abschnitte, die zwischen den jeweiligen Abgasrohrabschnitten (2, 3) angeordnet sind, aufweist und die Ringe (6, 7) überlagert.

13. Fahrzeugabgassystem (1) nach einem der vorhergehenden Ansprüche, wobei sich ein rohrförmiger Schild (2a) neben wenigstens einem Abschnitt der expandierbaren oder kontrahierbaren Dichtung (5) erstreckt.

14. Fahrzeugabgassystem nach Anspruch 13, wobei der rohrförmige Schild (2a) einen Abschnitt eines des ersten und zweiten Abgasrohrabschnitts (2, 3)aufweist, der sich neben wenigstens einem Abschnitt der expandierbaren oder kontrahierbaren Dichtung (5) erstreckt.

## Revendications

1. Système de tuyau d'échappement pour véhicule (1) comprenant :
une première partie de tuyau d'échappement (2) ;
une seconde partie de tuyau d'échappement (3) essentiellement en alignement axial avec la première partie de tuyau d'échappement (2) et déplaçable de façon axiale par rapport à la première partie de tuyau d'échappement (2) ;
un élément d'étanchéité (5) s'étendant entre les première et seconde parties de tuyau d'échappements (2, 3), le dispositif d'étanchéité (5) pouvant se dilater ou se contracter dans la direction axiale suivant le déplacement relatif des première et seconde parties de tuyau (2, 3) ; et,
des moyens de fixation fixant les première et seconde parties de tuyau (2, 3) dans une orientation axiale prédéterminée, les moyens de fixation comprenant des moyens de ressort agencés pour exercer une force de contrainte dans des directions axiales opposées suivant la relation de déplacement entre les première et seconde parties de tuyau (2, 3) ;
**caractérisé en ce que** les moyens de fixation comprennent un agencement d'agrafe élastique (8) ayant un bras respectif (12a, 12b, 12c, 12d) agissant sur une partie respective parmi les première et seconde parties de tuyau d'échappements (2, 3).

2. Système de tuyau d'échappement pour véhicule (1) selon la revendication 1, dans lequel les bras respectifs (12a, 12b, 12c, 12d) s'étendent l'un à côté de l'autre, et sont reliés à proximité de parties proximales respectives au niveau d'une liaison élastique (20).

3. Système de tuyau d'échappement pour véhicule (1) selon la revendication 1 ou 2, dans lequel les bras respectifs (12a, 12b, 12c, 12d) agissent sur des parties respectives parmi les première et seconde parties de tuyau d'échappements (2, 3) au niveau de positions espacées de façon circonférentielle autour de l'axe des première et seconde parties de tuyau (2, 3).

4. Système de tuyau d'échappement pour véhicule (1) selon l'une quelconque des revendications précédentes, dans lequel les bras respectifs (12a, 12b, 12c, 12d) présentent un vide central (19) pour loger le tuyau d'échappement (2, 3) permettant à l'agencement d'agrafe élastique d'enjamber le tuyau d'échappement (2, 3).

5. Système de tuyau d'échappement pour véhicule (1) selon l'une quelconque des revendications précédentes, dans lequel chacune des première et seconde parties de tuyau (2, 3) est pourvue d'un collier de raccord respectif (6, 7).

6. Système de tuyau d'échappement pour véhicule (1) selon la revendication 5, dans lequel les colliers de raccord respectifs (6, 7) s'étendent de façon circonférentielle autour de l'axe de tuyau d'échappement enfermant sensiblement le dispositif d'étanchéité pouvant se dilater ou se contracter (5).

7. Système de tuyau d'échappement pour véhicule (1) selon la revendication 5 ou 6, dans lequel les colliers de raccord respectifs (6, 7) ont des parties se chevauchant, et de préférence un dispositif d'étanchéité circonférentiel (9) prévu entre les parties se chevauchant respectives, dans lequel le dispositif d'étanchéité circonférentiel (9) est de préférence fixé efficacement par rapport à un des colliers de raccord (7) et peut coulisser par rapport à l'autre (6).

8. Système de tuyau d'échappement pour véhicule (1) selon l'une quelconque des revendications 5 à 7, dans lequel l'agencement d'agrafe élastique (8) agit sur les colliers de raccord respectifs (6, 7).

9. Système de tuyau d'échappement pour véhicule (1) selon la revendication 8, dans lequel les formations de prise respectives (10, 11, 13) (14, 15, 16) sont espacées dans la direction axiale du tuyau d'échappement (2, 3) sur lesquelles formations respectives (10, 11, 13) (14, 15, 16) les bras respectifs (12a, 12b, 12c, 12d) de l'agrafe élastique (8) agissent dans des directions axiales opposées.

10. Système de tuyau d'échappement pour véhicule (1) selon la revendication 8 ou 9, dans lequel les formations de prise (10, 11, 13) (14, 15, 16) comprennent des creux ou saillies respectives se trouvant de façon circonférentielle autour de la surface extérieure des colliers de raccord respectifs (6, 7).

11. Système de tuyau d'échappement pour véhicule (1) selon l'une quelconque des revendications précédentes, dans lequel le dispositif d'étanchéité pouvant se dilater ou se contracter (5) comprend un soufflet relié aux première et seconde parties de tuyau d'échappements (2, 3) respectivement.

12. Système de tuyau d'échappement pour véhicule (1) selon la revendication 11, dans lequel chacune des première et seconde parties de tuyau (2, 3) est pourvue d'un collier de raccord respectif (6, 7) recouvrant la partie de tuyau respective, le soufflet (5) ayant des parties coincées entre des parties de tuyau d'échappement respectives (2, 3) et des colliers de recouvrement (6, 7).

13. Système de tuyau d'échappement pour véhicule (1) selon l'une quelconque des revendications précédentes, dans lequel un écran tubulaire (2a) s'étend à côté d'au moins une partie du dispositif d'étanchéité pouvant se dilater ou se contracter (5).

14. Système de tuyau d'échappement pour véhicule selon la revendication 13, dans lequel l'écran tubulaire (2a) comprend une partie d'une des première et seconde parties de tuyau d'échappements (2, 3) s'étendant à côté d'au moins une partie du dispositif d'étanchéité pouvant se dilater ou se contracter (5).
